# EUROPÄISCHE PATENTSCHRIFT

(11) **EP 1 328 738 B1**
(45) Veröffentlichungstag und Bekanntmachung des Hinweises auf die Patenterteilung: **22.12.2004**
(21) Anmeldenummer: 01987855.2
(22) Anmeldetag: 13.10.2001
(51) Int. Cl.: F16F 9/02

(54) **VORRICHTUNG ZUM AUSLÖSEN EINER GASFEDER**
DEVICE FOR RELEASING A GAS SPRING
DISPOSITIF PERMETTANT DE DECLENCHER UN RESSORT A GAZ

(30) Priorität: 18.10.2000 DE 10051817
(43) Veröffentlichungstag der Anmeldung: 23.07.2003
(73) Patentinhaber: WANDSCHNEIDER, Ingeborg, 74909 Meckesheim (DE)
(72) Erfinder: WANDSCHNEIDER, Guido, 68801 Altlussheim (DE)
(74) Vertreter: Maisch, Thomas, Dr. rer. nat.
(86) Internationale Anmeldenummer: PCT/DE2001/003933
(87) Internationale Veröffentlichungsnummer: WO 2002/033286

(56) Entgegenhaltungen:
- DE-A- 19 515 368
- DE-A- 19 626 844
- DE-A- 19 716 720
- DE-U- 8 815 010
- US-A- 3 490 294
- PATENT ABSTRACTS OF JAPAN vol. 018, no. 677 (M-1727), 20. Dezember 1994 (1994-12-20) & JP 06 264950 A (TOKICO LTD), 20. September 1994 (1994-09-20)

## Beschreibung

Die Erfindung betrifft eine Vorrichtung zum Auslösen einer Gasfeder, mit einer Betätigungseinrichtung und einem mit der Betätigungseinrichtung wirkverbundenen, mittelbar oder unmittelbar auf den endseitigen Auslöser der Gasfeder wirkenden Betätigungsorgan, wobei das Betätigungsorgan als kraft- und/oder wegmäßig unteroder übersetzende Hebelanordnung ausgeführt ist, wobei einer der Hebel - Auslösehebel - auf den Auslöser drückt, wobei der Auslösehebel an einem Ende um eine ortsfeste Drehachse schwenkbar gelagert ist, wobei der Auslösehebel an seinem anderen Ende einen Kontaktbereich zum Zusammenwirken mit einem zweiten Hebel - Betätigungshebel - aufweist und wobei der Betätigungshebel an einem Ende um eine ortsfeste Drehachse schwenkbar gelagert und an seinem anderen Ende mit der Betätigungseinrichtung wirkverbunden ist.

Gasfedern sind in den unterschiedlichsten Ausführungsformen aus der Praxis bekannt. Zahlreiche Gasfedem umfassen ein integriertes Ventilsystem, wodurch sich die Gasfeder in jeder Position stufenlos feststellen bzw. blockieren lässt. Dabei ist der Kolben an einem Druckrohr abgedichtet und trennt zwei Gasräume voneinander. Bei geschlossenem Ventil ist die Gasfeder arretiert und ermöglicht eine Blockierung in der gewünschten Position. Durch Betätigung des meist als Auslösestößel ausgeführten Auslösers wird das Ventil geöffnet und die Gasfeder lässt sich so stufenlos positionieren. Die Ausschubgeschwindigkeit und Dämpfung kann dabei durch Wahl der Düse im Kolben entsprechend variiert werden.

Gasfedem der hier in Rede stehenden Art werden unterschiedlichst angewendet. Aus der Praxis bekannt ist die Anwendung solcher Gasfedem in Schreibtischstühlen. Ebenso lassen sich durch Gasfedem Autositze verstellen oder können Teile von Solarien bewegt werden. Auch lassen sich Schreibtische durch Gasfedem höhenverstellen.

Bei den aus der Praxis bekannten Gasfedem ist ein Betätigungsorgan erforderlich, welches mit einer Betätigungseinrichtung wirkverbunden ist und unmittelbar auf den endseitig der Gasfeder vorgesehenen Auslöser wirkt. Dabei werden bspw. bei Schreibtischstühlen Betätigungsorgane verwendet, die in Form einfacher Hebel ausgebildet sind, die in der Regel mit einem endseitigen Bereich unmittelbar auf den Auslöser drücken. Eine solche Ausgestaltung des Betätigungsorgans hat den enormen Nachteil, dass doch erhebliche Kräfte zum Auslösen der Gasfeder erforderlich sind. Hinzu kommt der weitere Nachteil, dass sich die Auslösung nur schwer dosieren lässt, so dass eine Regulierung der Gasfedergeschwindigkeit bei erheblichen Auslösekräften so gut wie nicht möglich ist.

Aus der DE 196 26 844 A1 ist eine Vorrichtung zum Auslösen einer Gasfeder bekannt. Das Betätigungsorgan der bekannten Vorrichtung umfasst neben dem Auslösehebel noch zwei weitere Hebel, die mit dem Auslösehebel schwenkbar gekoppelt sind. Die bekannte Vorrichtung ist daher sehr aufwendig ausgestaltet, was letztendlich zu hohen Herstellungskosten führt. Dies ist insbesondere im Hinblick auf eine Massenfertigung von großem Nachteil.

Aus der DE 197 16 720 A1 ist eine Vorrichtung zum Auslösen einer Gasfeder mit allen Merkmalen des Oberbegriffs des Patentanspruchs 1 bekannt. Insbesondere weist die aus der DE 197 16 720 A1 bekannte Vorrichtung zwei Hebel auf, die über einen Kontaktbereich zusammenwirken. Die Wirkverbindung zwischen den Hebeln ist entweder über eine Verzahnung oder über aneinander liegende Reibflächen realisiert.

Der vorliegenden Erfindung liegt daher die Aufgabe zugrunde, eine Vorrichtung zum Auslösen einer Gasfeder der eingangs genannten Art derart auszugestalten und weiterzubilden, dass eine einfache Betätigung der Gasfeder mit verminderten aufzubringenden Kräften erreicht ist.

Die vorliegende Erfindung löst die zuvor genannte Aufgabe durch die Merkmale des Patentanspruchs 1. Danach ist eine Vorrichtung zum Auslösen einer Gasfeder derart ausgebildet, dass der Kontaktbereich und/oder der Betätigungshebel eine frei drehbare Rolle oder Kugel zum Abwälzen an dem Betätigungshebel und/oder dem Kontaktbereich aufweist.

Damit ist ein verschleißender Abrieb und/oder eine Hemmung der Bewegung der Hebel im Kontaktbereich vermieden. Hierdurch ist ein besonders sicheres Zusammenwirken zwischen dem Auslösehebel und dem Betätigungshebel gewährleistet.

Weiterhin im Hinblick auf ein besonders sicheres Zusammenwirken zwischen den Hebeln könnte der Betätigungshebel und/oder der Auslösehebel eine Gleit- oder Wälzfläche aufweisen, die an den Radius der Rolle oder der Kugel hinsichtlich ihrer Krümmung in geeigneter Weise angepasst sein könnte. Mit anderen Worten könnte die Gleit- oder Wälzfläche gekrümmt ausgebildet sein.

Je nach individuellem baulichem Erfordernis könnte das Betätigungsorgan ein Übertragungselement aufweisen, mit dem der Auslösehebel auf den Auslöser drückt. Dabei könnte der Auslösehebel indirekt ― über das Übertragungselement ― auf den Auslöser drücken. Hierdurch könnten sich bspw. individuell vorliegende Distanzen zwischen dem Auslöser und dem Auslösehebel überbrücken lassen.

Im konkreten könnte das Übertragungselement linear verschiebbar sein. Hierdurch lassen sich üblicherweise Distanzen zwischen dem Auslösehebel und dem Auslöser besonders effektiv überbrücken.

Im konstruktiv einfachsten Fall könnte das Übertragungselement ein Stift sein. Zur Anpassung an individuelle Distanzen könnte das Übertragungselemenet in seiner Länge justierbar sein. In einem besonders einfachen Fall könnte das Übertragungselement aus einer Hülse mit einem Innengewinde und einer mit dem Innengewinde eingreifenden Schraube bestehen. Je nach Einschraubtiefe weist das Übertragungselement dann eine unterschiedliche Länge auf. Ggf. könnte auf der Schraube noch eine Kontermutter vorgesehen sein, so dass sich die Länge des Übertragungselements nicht unbeabsichtigt verändern kann.

Das Betätigungsorgan könnte in besonders effektiver Weise in Verlängerung an einer Stirnseite der Gasfeder angeordnet sein und damit mit der Gasfeder fluchten.

Zur Kontrolle der Schwenkbewegung des Auslösehebels könnte dem Auslösehebel ein Anschlag für seine vom Auslöser weggerichtete Schwenkbewegung zugeordnet sein. Hierdurch ist eine übermäßige Schwenkbewegung des Auslösehebels vermieden.

Im Hinblick auf eine besonders sichere und kompakte Anordnung könnte das Betätigungsorgan in einem sich an den Auslöser anschließenden Gehäuse angeordnet sein. Hinsichtlich einer sicheren Befestigung des Betätigungsorgans an der Gasfeder könnte das Gehäuse mittels eines Bajonettverschlusses an der Gasfeder festlegbar sein. Alternativ oder zusätzlich hierzu könnte das Gehäuse einen Kragen oder einen Schulterbereich aufweisen, der zur Festlegung an der Gasfeder dienen könnte.

In einer weiteren Alternative könnte das Gehäuse einen Flanschbereich mit mindestens einem Durchgang aufweisen. Durch einen derartigen Durchgang könnte eine Schraube geführt werden, die mit der Gasfeder verschraubbar ist. Im Hinblick auf eine besonders kompakte Ausgestaltung könnte das Gehäuse mindestens eine mit dem Durchgang im wesentlichen fluchtende Nut aufweisen. Hierdurch ist eine besonders enge Führung einer Schraube am Gehäuse ermöglicht.

Bei Vorliegen eines Übertragungselements könnte das Gehäuse einen Führungsabschnitt für das Übertragungselement aufweisen. Hierdurch ist ein besonders sicherer Betrieb der Vorrichtung gewährleistet. Im Konkreten könnte der Führungsabschnitt zylinderförmig ausgebildet sein, wobei das Übertragungselement innerhalb des Zylinders geführt wäre.

Hinsichtlich eines besonders sicheren Betriebs der Vorrichtung könnte die Betätigungseinrichtung über einen Seil- bzw. Bowdenzug auf das Betätigungsorgan wirken. Hierzu könnte dem Gehäuse eine Führung für den Seil- bzw. Bowdenzug zugeordnet sein.

Das Verhältnis der Hebelabschnitte einerseits des Auslösehebels zwischen ortsfester Drehachse und Auslöser sowie zwischen Auslöser und Kontaktbereich und andererseits des Betätigungshebels zwischen ortsfester Drehachse und Kontaktbereich sowie zwischen Kontaktbereich und freiem Ende bzw.

Wirkverbindung mit der Betätigungseinrichtung könnte das Maß der Unter- oder Übersetzung vorgeben.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im allgemeinen bevorzugte Ausgestaltungen und Weiterbildungen der Lehre erläutert. In der Zeichnung zeigen
- Fig. 1: in einer Seitenansicht, schematisch und teilweise geschnitten, das Ausführungsbeispiel einer erfindungsgemäßen Vorrichtung zum Auslösen einer Gasfeder im auf eine Gasfeder montierten Zustand,
- Fig. 2: in einer Draufsicht, schematisch, das Gehäuse des Ausführungsbeispiels aus Fig. 1 und
- Fig. 3: in einer Vorderansicht, schematisch und teilweise geschnitten, das Ausführungsbeispiel aus Fig. 1 ohne Hebelanordnung.

Die Figuren zeigen eine Vorrichtung zum Auslösen einer hier nur endseitig dargestellten Gasfeder 1, wobei die Vorrichtung eine hier lediglich angedeutete Betätigungseinrichtung 2 und ein mit der Betätigungseinrichtung 2 wirkverbundenes, unmittelbar auf den endseitigen Auslöser 3 der Gasfeder 1 wirkendes Betätigungsorgan 4 umfasst. Das Betätigungsorgan 4 ist als kraft- und/oder wegmäßig unter- oder übersetzende Hebelanordnung 5 ausgeführt, wobei einer der Hebel - Auslösehebel 6 - auf den Auslöser 3 drückt und wobei der Auslösehebel 6 an einem Ende um eine ortsfeste Drehachse 7 schwenkbar angelenkt ist.

Im Hinblick auf eine einfache und sichere Betätigung der Gasfeder 1 mit konstruktiv einfachen und kostengünstigen Mitteln weist der Auslösehebel 6 an seinem anderen Ende einen Kontaktbereich 8 zum Zusammenwirken mit einem zweiten Hebel - Betätigungshebel 9 - auf. Der Betätigungshebel 9 ist an einem Ende um eine ortsfeste Drehachse 10 schwenkbar angelenkt und an seinem anderen Ende mit der Betätigungseinrichtung 2 wirkverbunden.

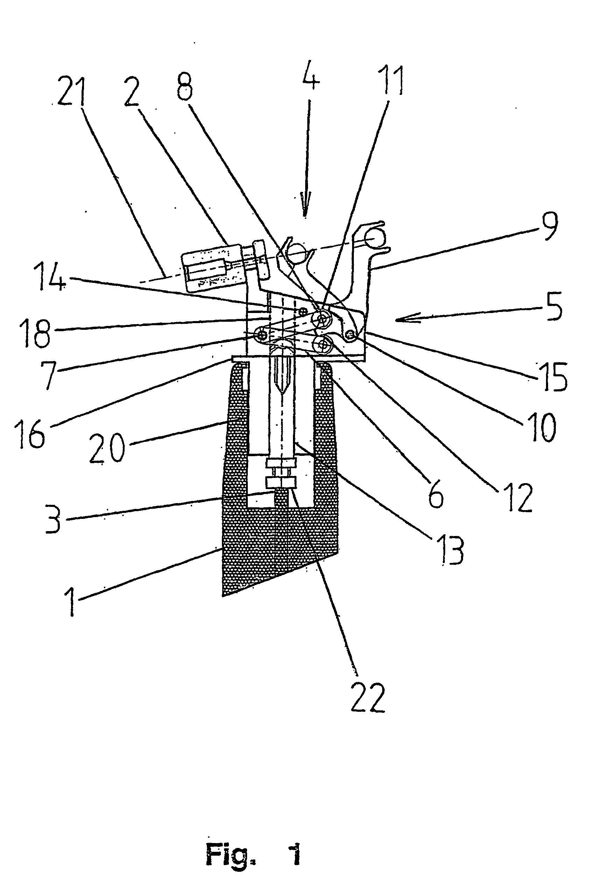

Die Fig. 1 zeigt besonders deutlich, dass der Kontaktbereich 8 eine frei drehbare Rolle 11 zum Abwälzen an dem Betätigungshebel 9 aufweist. Hierzu weist der Betätigungshebel 9 eine Wälzfläche 12 auf.

Zur Übertragung des durch den Auslösehebel 6 erzeugten Drucks auf den Auslöser 3 ist ein Übertragungselement 13 vorgesehen. Das Übertragungselement 13 ist linear verschiebbar und im wesentlichen als Stift ausgebildet. Des weiteren ist das Übertragungselement 13 in seiner Länge justierbar.

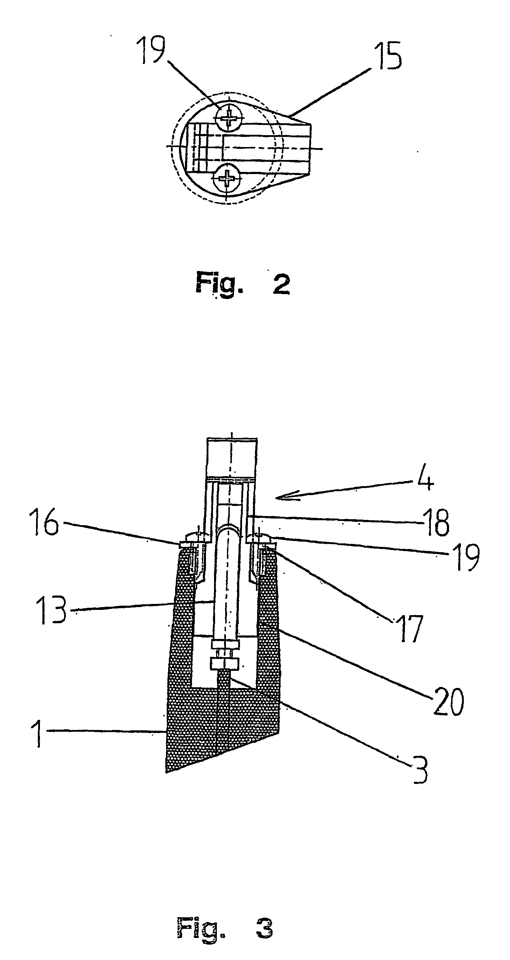

Wie aus den Fig. 1 und 3 erkennbar ist, ist das Betätigungsorgan 4 in Verlängerung an einer Stirnseite der Gasfeder 1 angeordnet. Daher fluchtet das Betätigungsorgan 4 mit der Gasfeder 1.

Dem Auslösehebel 6 ist ein Anschlag 14 für seine vom Auslöser 3 weggerichtete Schwenkbewegung zugeordnet. Dieser Anschlag 14 ist genauso wie das Betätigungsorgan 4 in einem sich an den Auslöser 3 anschließenden Gehäuse 15 angeordnet.

Zur Befestigung an der Gasfeder 1 weist das Gehäuse 15 einen Flanschbereich 16 mit mindestens einem Durchgang 17 auf. Das Gehäuse 15 weist mindestens eine mit dem Durchgang 17 im wesentlichen fluchtende Nut 18 auf. Aufgrund der Nut 18 ist es in einfacher Weise möglich, eine Schraube 19 durch den Durchgang 17 hindurch in ein in der Gasfeder 1 ausgebildetes Gewinde einzuschrauben.

Das Gehäuse 15 weist des weiteren einen Führungsabschnitt 20 für das Übertragungselement 13 auf. Der Führungsabschnitt 20 ist zylinderförmig ausgebildet.

Die Betätigungseinrichtung 3 wirkt über einen Bowdenzug 21 auf das Betätigungsorgan 4.

In Fig. 1 sind der Auslösehebel 6 und der Betätigungshebel 9 in zwei Stellungen dargestellt. Zum einen in der Stellung, in der die Gasfeder 1 ausgelöst ist, und zum anderen in der Stellung, in der die Gasfeder 1 nicht ausgelöst ist.

Fig. 2 zeigt das Gehäuse 15 in einer schematischen Draufsicht. Dabei sind der Übersichtlichkeit halber die Hebel 6 und 9 weggelassen.

Das Übertragungselement 13 weist zur Längenjustierung eine Schraube 22 auf, die in eine Hülse des Übertragungselements 13 einschraubbar ist.

Abschließend sei ganz besonders hervorgehoben, dass das voranstehend erörterete Ausführungsbeispiel lediglich zur Erörterung der beanspruchten Lehre dient, diese jedoch nicht auf das Ausführungsbeispiel einschränkt.

## Patentansprüche

1. Vorrichtung zum Auslösen einer Gasfeder (1), mit einer Betätigungseinrichtung (2) und einem mit der Betätigungseinrichtung (2) wirkverbundenen, mittelbar oder unmittelbar auf den endseitigen Auslöser (3) der Gasfeder (1) wirkenden Betätigungsorgan (4), wobei das Betätigungsorgan (4) als kraft- und/oder wegmäßig unter- oder übersetzende Hebelanordnung (5) ausgeführt ist, wobei einer der Hebel - Auslösehebel (6) - auf den Auslöser (3) drückt, wobei der Auslösehebel (6) an einem Ende um eine ortsfeste Drehachse (7) schwenkbar gelagert ist, wobei der Auslösehebel (6) an seinem anderen Ende einen Kontaktbereich (8) zum Zusammenwirken mit einem zweiten Hebel - Betätigungshebel (9) - aufweist und wobei der Betätigungshebel (9) an einem Ende um eine ortsfeste Drehachse (10) schwenkbar gelagert und an seinem anderen Ende mit der Betätigungseinrichtung (2) wirkverbunden ist,
**dadurch gekennzeichnet, dass** der Kontaktbereich (8) und/oder der Betätigungshebel eine frei drehbare Rolle (11) oder Kugel zum Abwälzen an dem Betätigungshebel (9) und/oder dem Kontaktbereich aufweist.

2. Vorrichtung nach Anspruch 1, **dadurch gekennzeichnet, dass** der Betätigungshebel (9) und/oder der Auslösehebel eine Gleit- oder Wälzfläche (12) aufweist, wobei vorzugsweise die Gleit- oder Wälzfläche (12) gekrümmt ist.

3. Vorrichtung nach Anspruch 1 oder 2, **dadurch gekennzeichnet, dass** das Betätigungsorgan (4) ein Übertragungselement (13) aufweist, mit dem der Auslösehebel (6) auf den Auslöser (3) drückt, wobei vorzugsweise das Übertragungselement (13) linear verschiebbar und/oder ein Stift und/oder in seiner Länge justierbar ist.

4. Vorrichtung nach einem der Ansprüche 1 bis 3, **dadurch gekennzeichnet, dass** das Betätigungsorgan (4) in Verlängerung an einer Stirnseite der Gasfeder (1) angeordnet ist und daher mit der Gasfeder (1) fluchtet.

5. Vorrichtung nach einem der Ansprüche 1 bis 4, **dadurch gekennzeichnet, dass** dem Auslösehebel (6) ein Anschlag (14) für seine vom Auslöser (3) weggerichtete Schwenkbewegung zugeordnet ist.

6. Vorrichtung nach einem der Ansprüche 1 bis 5, **dadurch gekennzeichnet, dass** das Betätigungsorgan (4) in einem sich an den Auslöser (3) anschließenden Gehäuse (15) angeordnet ist.

7. Vorrichtung nach Anspruch 6, **dadurch gekennzeichnet, dass** das Gehäuse mittels eines Bajonettverschlusses an der Gasfeder festlegbar ist und/oder einen Kragen oder einen Schulterbereich aufweist.

8. Vorrichtung nach Anspruch 6 oder 7, **dadurch gekennzeichnet dass** das Gehäuse (15) einen Flanschbereich (16) mit mindestens einem Durchgang (17) aufweist, wobei vorzugsweise das Gehäuse (15) mindestens eine mit dem Durchgang (17) im Wesentlichen fluchtende Nut (18) aufweist.

9. Vorrichtung nach einem der Ansprüche 6 bis 8, **dadurch gekennzeichnet, dass** das Gehäuse (15) einen Führungsabschnitt (20) für das Übertragungselement (13) aufweist, wobei vorzugsweise der Führungsabschnitt (20) zylinderförmig ausgebildet ist.

10. Vorrichtung nach einem der Ansprüche 1 bis 9, **dadurch gekennzeichnet, dass** die Betätigungseinrichtung (2) über einen Seil- bzw. Bowdenzug (21) auf das Betätigungsorgan (4) wirkt.

## Claims

1. Device for releasing a gas spring (1), with an actuating mechanism (2) and an actuating member (4) which is operatively connected to the actuating mechanism (2) and acts indirectly or directly on the terminal release (3) of the gas spring (1), wherein the actuating member (4) is constructed as a lever arrangement (5) which reduces or increases force and/or travel, wherein one of the levers - release lever (6) - presses on the release (3), wherein the release lever (6) is mounted at one end so as to be pivotable about a stationary pivot (7), wherein the release lever (6) comprises at its other end a contact region (8) for co-operating with a second lever - actuating lever (9) - and wherein the actuating lever (9) is mounted at one end so as to be pivotable about a stationary pivot (10) and is operatively connected at its other end to the actuating mechanism (2),
**characterised in that** the contact region (8) and/or the actuating lever comprise(s) a freely rotatable roller (11) or ball for rolling on the actuating lever (9) and/or the contact region.

2. Device according to Claim 1, **characterised in that** the actuating lever (9) and/or the release lever comprise(s) a slide or rolling face (12), wherein the slide or rolling face (12) is preferably curved.

3. Device according to Claim 1 or 2, **characterised in that** the actuating member (4) comprises a transmission element (13) by way of which the release lever (6) presses on the release (3), wherein the transmission element (13) is preferably displaceable in linear fashion and/or a pin and/or adjustable in length.

4. Device according to any one of Claims 1 to 3, **characterised in that** the actuating member (4) is disposed in an extension at an end side of the gas spring (1) and is therefore aligned with the gas spring (1).

5. Device according to any one of Claims 1 to 4, **characterised in that** a stop (14) for the pivotal movement of the release lever (6) away from the release (3) is associated with the release lever.

6. Device according to any one of Claims 1 to 5, **characterised in that** the actuating member (4) is disposed in a housing (15) adjoining the release (3).

7. Device according to Claim 6, **characterised in that** the housing can be fixed to the gas spring by mans of a bayonet catch and/or comprises a collar or a shoulder region.

8. Device according to Claim 6 or 7, **characterised in that** the housing (15) comprises a flanged region (16) with at least one passage (17), wherein the housing (15) preferably comprises at least one groove (18) which is substantially aligned with the passage (17).

9. Device according to any one of Claims 6 to 8, **characterised in that** the housing (15) comprises a guide portion (20) for the transmission element (13), wherein the guide portion (20) is preferably cylindrical.

10. Device according to any one of Claims 1 to 9,
**characterised in that** the actuating mechanism (2) acts on the actuating member (4) via a cable or Bowden control (21).

## Revendications

1. Dispositif de déclenchement d'un ressort à gaz (1), avec un dispositif d'actionnement (2) et un organe d'actionnement (4) relié activement à l'organe d'actionnement (2), agissant indirectement ou directement sur le déclencheur (3) du ressort à gaz (1) du côté d'extrémité, l'organe d'actionnement (4) étant réalisé sous forme d'un ensemble de leviers (5) démultiplicateurs ou multiplicateurs en force et/ou en déplacement, l'un des leviers - levier de déclenchement (6) - pressant sur le déclencheur (3), le levier de déclenchement (6) étant monté à pivotement à une extrémité autour d'un axe de rotation (7) fixe, le levier de déclenchement (6) présentant à son autre extrémité une zone de contact (8) pour la coopération avec un second levier - levier d'actionnement (9) - et le levier d'actionnement (9) étant monté à pivotement autour d'un axe de rotation (10) fixe et étant relié activement à son autre extrémité au dispositif d'actionnement (2),
**caractérisé par le fait que** la zone de contact (8) et/ou le levier d'actionnement présentent un rouleau (11) libre en rotation ou une bille pour rouler sur le levier d'actionnement (9) et/ou la zone de contact.

2. Dispositif selon la revendication 1,
**caractérisé par le fait que** le levier d'actionnement (9) et/ou le levier de déclenchement présentent une surface de glissement ou de roulement (12), la surface de glissement ou de roulement (12) étant de préférence courbe.

3. Dispositif selon la revendication 1 ou 2,
**caractérisé par le fait que** l'organe d'actionnement (4) présente un élément de transmission (13) par lequel le levier de déclenchement (6) presse sur le déclencheur (3), l'élément de transmission (13) étant de préférence coulissant linéairement et/ou une broche et/ou ajustable sur sa longueur.

4. Dispositif selon l'une des revendications 1 à 3,
**caractérisé par le fait que** l'organe d'actionnement (4) est disposé en prolongement sur une face frontale du ressort à gaz (1) et est de ce fait aligné avec le ressort à gaz (1).

5. Dispositif selon l'une des revendications 1 à 4,
**caractérisé par le fait qu'**une saillie (14) est adjointe au levier de déclenchement (6) pour son déplacement de pivotement orienté en trajectoire par le déclencheur (3).

6. Dispositif selon l'une des revendications 1 à 5,
**caractérisé par le fait que** l'organe d'actionnement (4) est disposé dans un carter (15) se raccordant au déclencheur (3).

7. Dispositif selon la revendication 6,
**caractérisé par le fait que** le carter peut être fixé au ressort à gaz au moyen d'une fermeture à baïonnette et/ou présente une collerette ou une zone d'épaulement.

8. Dispositif selon la revendication 6 ou 7,
**caractérisé par le fait que** le carter (15) présente une zone de flasque (16) avec au moins un passage (17), le carter (15) présentant de préférence au moins une rainure (18) essentiellement alignée avec le passage (17).

9. Dispositif selon l'une des revendications 6 à 8,
**caractérisé par le fait que** le carter (15) présente une section de guidage (20) pour l'élément de transmission (13), la section de guidage (20) étant de préférence conformée cylindriquement.

10. Dispositif selon l'une des revendications 1 à 9,
**caractérisé par le fait que** le dispositif d'actionnement (2) agit sur l'organe d'actionnement (4) par l'intermédiaire d'un câble sous gaine ou respectivement Bowden(21).
